# EUROPEAN PATENT APPLICATION

(11) **EP 0 918 290 A1**
(43) Date of publication of application: **26.05.1999**
(21) Application number: 98870130.6
(22) Date of filing: 09.06.1998
(51) Int. Cl.: G06F 15/78, G06F 9/30, G06F 9/38, G06F 9/318

(54) **Method for transferring data structures from and to vector registers of a processor**

(30) Priority: 19.11.1997 US 66159 P
(71) Applicant: INTERUNIVERSITAIR MICRO-ELEKTRONICA CENTRUM VZW, 3001 Heverlee (BE)
(72) Inventor: Molenaar, Dennis, 3000 Leuven (BE)
(74) Representative: Van Malderen, Joelle

(57) **Abstract**

Method for loading and/or storing a data set that has to be processed by a processor according to an algorithm, characterised in that said data set into a vector register before said data set is processed, and said algorithm comprises emptying said vector register.

## Description

### Field of the invention

This invention relates to a method for transferring data structures to and from a processor using vector registers.

### State of the art

The typical data processing algorithms, like voice and image coding, work on sets of data elements to perform its desired function. These sets of data elements could be seen as an one-dimensional array.

Current state of the art implementations translate the description of the algorithm into a series of basic processor instructions and thus the link between different data-items is lost.
A typical piece of C code for a voice coding algorithm looks like:

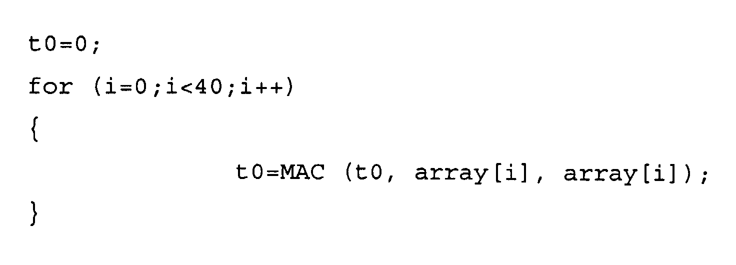

This specific example calculates the energy of a array. If this would be coded with a general instruction set, the resulting assembly code would look like this:

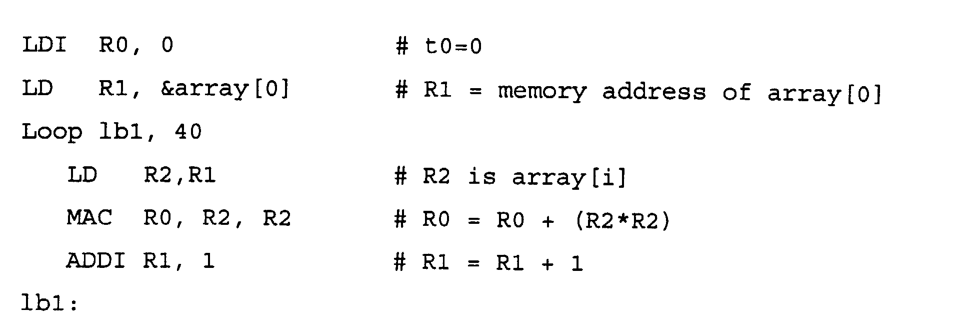

The loop as shown in the C code consist of 3 instructions: a load, the operation and an address modifier.

### Aims of the invention

A first aim of the present invention is to reduce the number of instructions necessary to process data structures with a processor. A second aim of the present invention is to reduce the amount of stall cycles in a processor for a given instruction set. A third aim of the invention is to allow the loading of data in advance. Another aim of the present invention is to reduce the number of memory transfers (read or writes from/into the memory). A further aim of the present invention is to enhance and/or simplify memory management.

### Summary of the invention

The present invention concerns a method for loading and/or storing a data set that has to be processed by a processor according to an algorithm, characterised in that said data set into a vector register before said data set is processed, and said algorithm comprises emptying said vector register.

A Vector Register is a hardware component which allows a normal register of a programmable processor to act as an access port to a array of data elements (a vector).The data elements of the vector can be read or written through the use of the register as an operand in instructions. The manner in which data elements can be read or written is programmable. A vector register can be implemented in any normal register.

A vector is thus a grouping of data elements which are processed by an algorithm as one block. It therefore describes an relation between different elements on the algorithmic level. This does not mean that all elements are processed in the same manner. (most of the time they will but it is not implied).

A register is the storage elements within a programmable processor which are(can be) used as attributes to instructions.

Said processor is preferably a General Purpose Processor or a Digital Signal Processor (DSP).

Preferably, said vector register is programmed by a vector instruction.

In a preferred embodiment, said vector instruction comprises a number of words, the address of a first word, a vector mode and a target vector register. Said vector mode comprises preferably procedures to store and/or load data and/or to access a read vector by the processor. Said vector mode is advantageously selected from the group consisting of Read Mode, Write Mode, Window_read Mode, Read-write Mode, Cyclic Read-Write Mode and Multiple Read Mode. More vector modes can be thought of Said vector register is preferably made accessible through a general purpose register set of the processor.

### Detailed description of the invention

The present invention is a novel method for loading and/or storing multi-dimensional data-structures. The method uses (a) vector instruction(s) which can automatically load/store the data-structure from or to memory through the vector register.

### Brief description of the figures:

Figure 1 describes the extra vector functionality required for memory optimization.

Figure 2 shows the general purpose register set.

Figure 3 discloses the special purpose register set. In figure 4, the viterbi decoding for 2J and 2J+1, also called the viterbi butterfly, is depicted.

Figure 5 shows the instruction formats.

In figure 6 and 7, the instruction set layout is disclosed.

In figure 8, the structure of a basic pipeline is drawn.

Figure 9 describes an instruction stream going through the pipeline.

Figure 10 shows the pipeline operation for non-control instructions.

Figure 11 discloses the pipeline operation for a taken branch instruction.

In figure 12, the pipeline operation for a loop instruction with one instruction in the loop body is shown.

The present invention will be further clarified in several non-limiting examples.

### Example 1:

The example from the state of the art showed that current state solutions often require instructions inside the critical loops to transfer data-structures from and to memory. Our novel method will execute an instruction outside the critical loop which will initialize the vector register. The vector register will perform the loading/storing of all required data-elements of the data) structure.

These data elements are made available to the processor through a general purpose register inside the processors register set. Such a processor register can be an extra register added to the register set or a normal register can be used when a vector is initialized. In this case the whole vector will be loaded outside the loop and only one instruction will remain inside the loop.

After rewriting the above code so that it uses a vector register the code will now look like this:

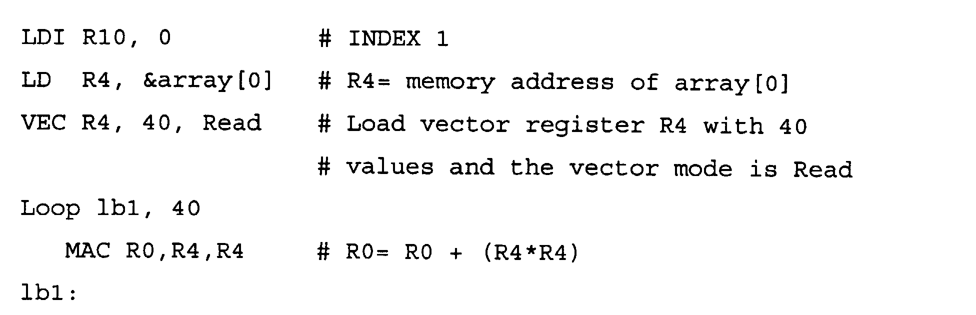

Only one extra instruction is in this case required outside the main loop and within the loop only one instruction is executed. This results in a speed-up of a factor 3 compared to the state of the art.

The method according to the present invention has the following advantages:
- Loading of vector can be tailored to match the architecture of modern memory chips.
- Cache performance can be increased since non-cacheable data is not fetched through the cache.
- Only one instruction (or two, depending on the implementation) is required and no dedicated instruction bits.
- The size of the physical vector register can be adjusted to relieve the memory interface. A vector register can have a buffer attached to it from which one value is actually read.
- The advantage of vector loading is that the loading of vectors can be scheduled in advance so that less stall cycles are required and thus faster execution.

The vector instruction(s) initialize(s) vector register by setting the following parameters:
Number of the Vector Register [Optional]
Address of the first element [Required]
Number of elements [Required]
Mode of the vector (Load/Store/WindowLoad etc) [Optional]
Address generation function. [Optional]
Other parameters can also be used, if necessary.

These parameters will initialize the vector controller of the vector register which will start loading or storing the vector depending on the mode of the vector.

Data is written into the vector register by the processor through a register inside the register set of a processor.

As mentioned before this register can be a dedicated interface to a vector register or a normal register can be used which becomes the interface for the vector register as soon as the vector is initialized.

When a data item is transferred through the vector register the number of elements will be lowered until it reaches zero. If all data-elements are transferred the vector register becomes inactive and in case a normal register was used as an interface this register will be available again for normal computing.

### Example 2:

An example and detailed implementation of a vector register into a dedicated Digital Signal Processor (DSP) is shown in the next section. It describes the vector instruction the modes used in this case for the vector register and their operations.

### The layout of a vector instruction.

When a vector instruction is issued the following variables are required:
- Number of words
- Address of the first word
- Vector Mode
- Target vector register

The proposed vector instruction holds the size, mode and vector register number. The address of the first data element is retrieved from the register in the register set which will be replaced by the vector instruction.

After initialization, data can be loaded from memory or data can be stored in memory. In both cases, the required address is generated by a dedicated address generator which can generate sequential addresses starting from the given start address. Other addressing schemes could be used to load a two-dimensional block from memory into the vector register.

In case a vector is loaded from memory then the data elements are fetched immediately until there is no more space in the vector buffer to hold the elements. The loaded vector elements can be retrieved from the vector register by reading the entry from the vector register.

For a write data elements are written into the vector register. This element is through the vector register into the memory.

A vector register can be accessed by the processor through a dedicated general purpose register or by overlapping the vector register with a normal register. Thus instead of transferring data to/from the normal register will the data be transferred to/from the vector register.

### The Read vector mode.

When a vector instruction is executed it uses the content of the register it will replace, as the address of the vector.

The size of the vector register is copied into a internal register and the mode is used to set the necessary control signals within the vector register.

In case the mode indicates a vector load then the vector register is initialized and as a consequence the vector buffer is empty.

As long as the vector buffer is not full a load will be issued to the memory for the next item.

When a data item is received from the memory it is stored in the vector buffer. Only when at least one item is in the vector buffer a read can be done from the vector register. When an item is read from the vector register then the vector register will point to the next unread item in the vector buffer.

Thus the vector buffer functions as a circular buffer. There is a pointer that points to the next item to be read, the place where to write the next item from memory and an additional pointer which points to the last item in the buffer.

The following C like description gives a more in-depth description of a vector load instruction.

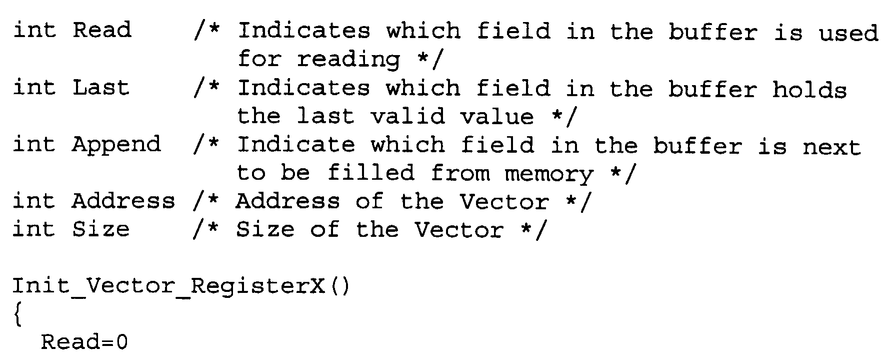

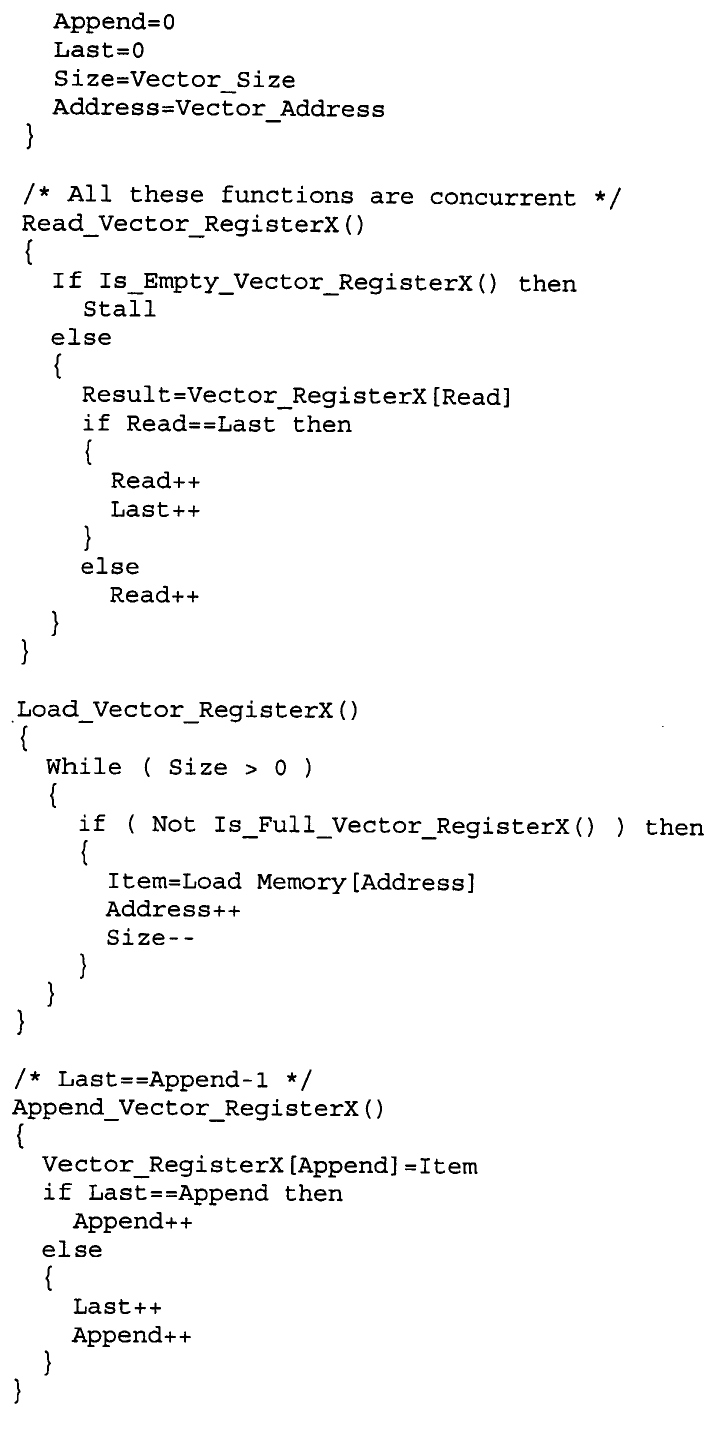

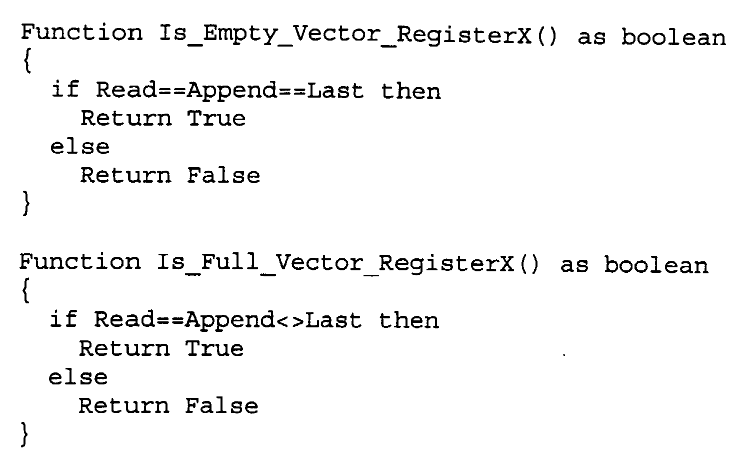

### The vector write mode.

For a vector write mode is the vector buffer filled by the processor and is the first pointer used to write the values into memory. The processor writes in the buffer at the position pointed at by the append pointer of the read mode.

### The vector windowread mode.

The vector register can be easily adapted to handle the data loading of memory optimized software as will be shown in Table 1 by using the windowread mode. All this mode needs is a beginwindow pointer F and an endwindow pointer W.

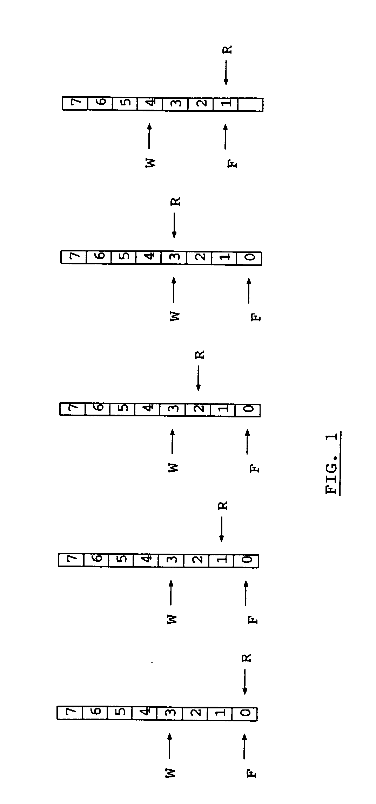

Now when the vector register is read the data pointed by the readpointer R (which is initially the beginwindow pointer F) is returned. The readpointer R is incremented as usual and this continues until the readpointer is equal to the endwindow pointer W. Now the beginwindow pointer and endwindow pointer are incremented and the read pointer is reset to the new beginwindow pointer. This process is shown in figure 1

### The read-write vector mode.

The viterbi channel decoder uses a state vector to decode the current bit. In the process the new state vector for the next step is calculated. Thus the state vector is read and afterwards written.

To support this with a vector register the read and write pointer should indicate the same buffer value and this is only increased when the item is read and written.

### The cyclic read-write vector mode.

Sometimes the same vector is traversed several times. It is then possible to automatically reload the vector.

The benefit of having cyclic vector registers is that sometimes a vector is used several times for reading and writing. This is especially beneficiary if the vector is completely maintained in a vector register.

To be able to reload the vector into the vector register, the address of the first element and the size of the vector have to be copied. Thus the original is kept and vector operations are performed on the copy. When the whole vector is traversed the originals are copied again and the process can be restarted.

### The multiple read vector mode.

Sometimes it is handy if a vector register can be read multiple times. The application area for this mode is shown in the memory optimized assembly code in the section on memory optimizations.

By allowing a vector register to be read a certain number of times. Instead of changing the read pointer every time a value is read, will the read pointer only be changed when the current buffer entry is read X times.

### Memory Optimizing a loop is uses all modes.

First the normal code is given which will be optimized and then the best implementation will be given using the available vector modes.
The code used is the calculation of a convolution.

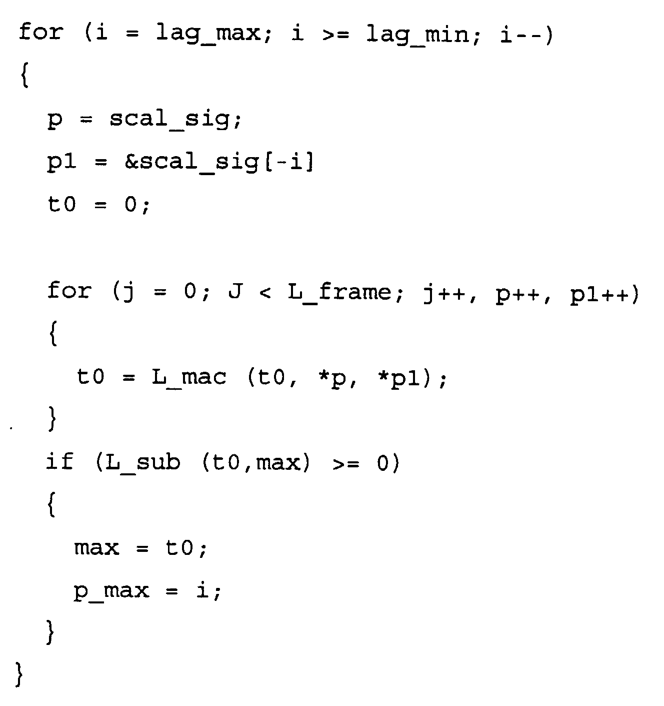

The elements that are read by the pointer p belong to the same vector of size Lframe(=40). While the elements read by p1 is also a vector of size Lframe the vector shifted to the right, with respect to itself in the previous iteration of the outer loop.

Table 1 shows that several iterations of the outer loop use the same data elements.

**Table 1:**

| Data elements read by the inner loop for several iterations of the outer loop. | | | | |
|---|---|---|---|---|
| i=-n,j=0 | S[-n]*s[0] | s[-n+1]*s[1] | s[-n+2]*a[2] | s[-n+3]*a[3] |
| i=-n+1,j=0 | S[-n+1]*s[0] | s[-n+2]*s[1] | s[-n+3]*a[2] | s[-n+4]*a[3] |
| i=-n+2,j=0 | S[-n+2]*s[0] | s[-n+3]*s[1] | s[-n+4]*a[2] | s[-n+5]*a[3] |
| i=-n+3,j=0 | S[-n+3]*s[0] | s[-n+4]*s[1] | s[-n+5]*a[2] | s[-n+6]*a[3] |

If several of the outer loop iterations are combined with the inner-loop the C-code would look like this:

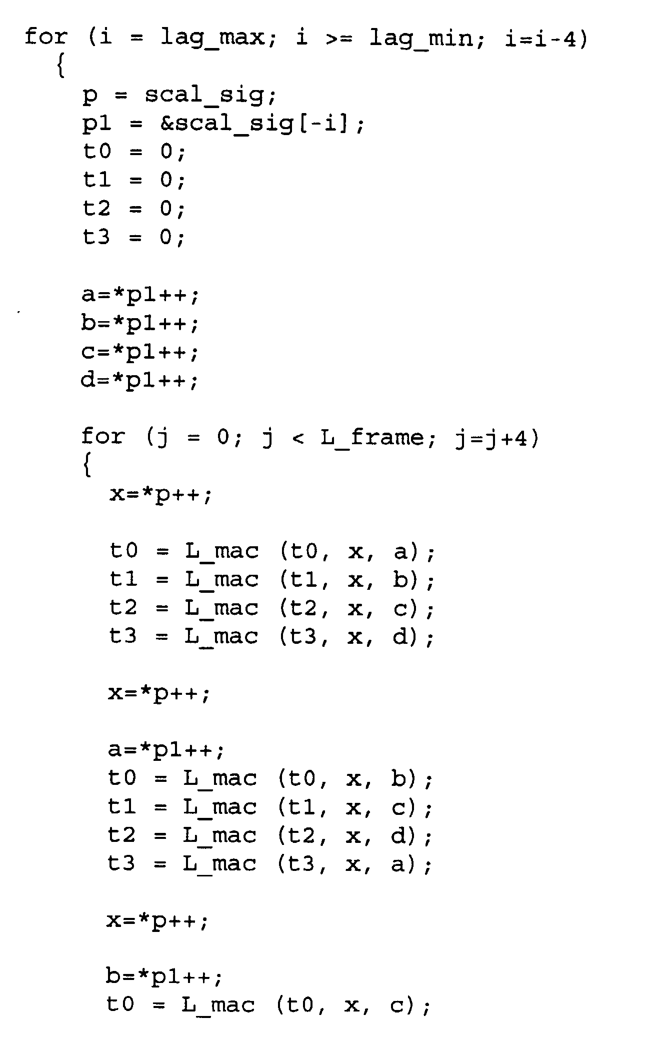

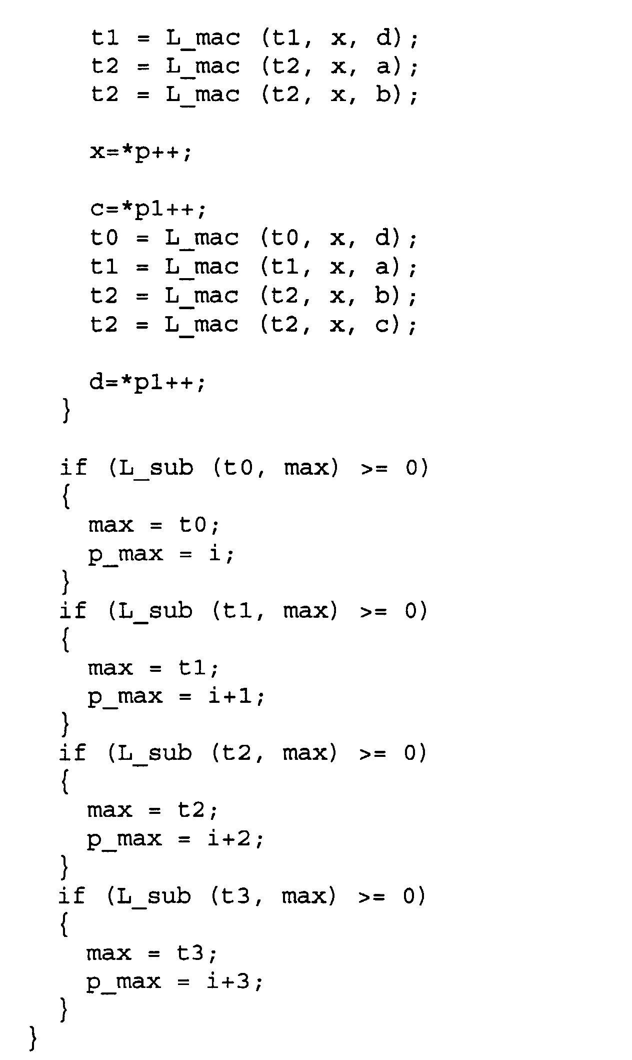

The code shown above only needs 12 out of 32 reads from the memory. The efficiency of this and all other modes is shown in the following C-code.

The assembly code when using vector register and all possible modes looks like this:

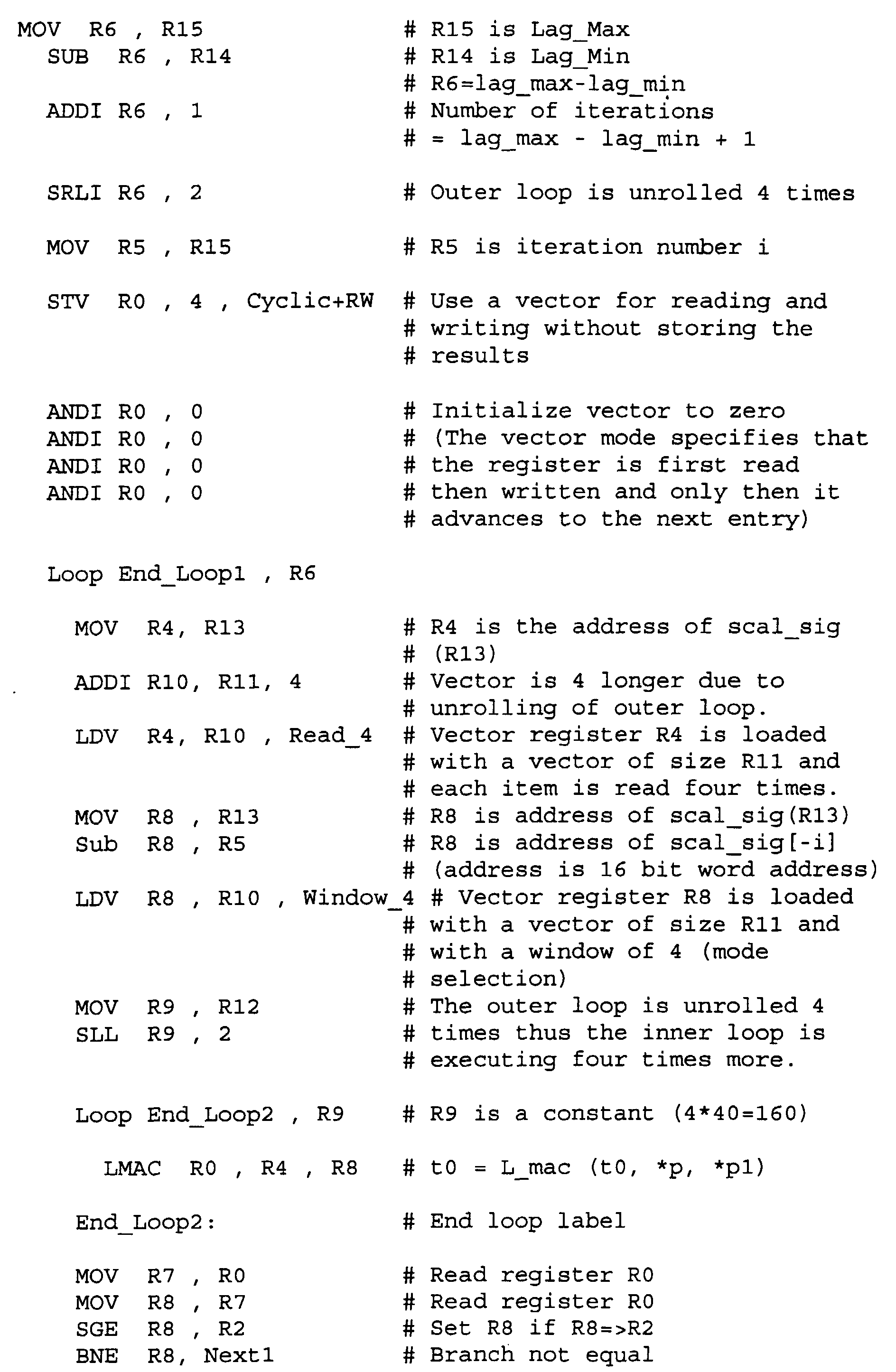

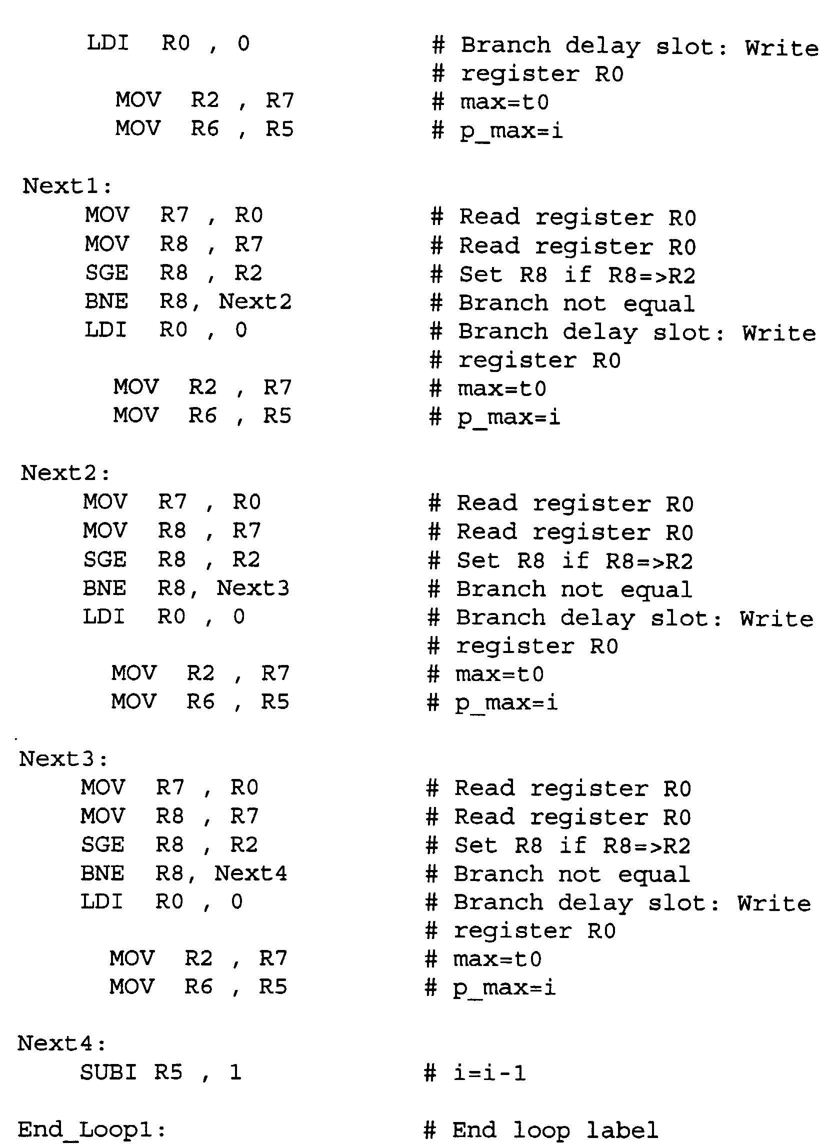

### Example 3: use of the Vector unit in a dedicated DSP.

### Introduction

The heart of the ASPIS multimode terminal is the Digital Signal Processor (DSP) which transforms the incoming digitized voice signal into packets which are ready for transmission. Transforming the input data stream into the output data stream implies executing the following algorithms for GSM:
- Voice Coding/Decoding: (de) compress the digitized speech.
- Channel Coding/Decoding: Protect a speech frame against transmission errors.

This document describes the required instruction set and hardware architecture to ensure fast execution of these time-critical algorithms.

The description of the functionality of the DSP processor begins by describing what we would like to implement. This is explained in the next section which explains the design goals on which the DSP design is based. The first step in the design of the DSP is the memory architecture. When the memory architecture is fixed, the instruction set is given. Finally, the hardware architecture is explained which will execute the instruction set.

### Design goals for the DSP

Design goals are conclusions which are made after examining the different algorithms. These conclusions describe what should be included in the processor to implement the algorithms in an efficient manner.

The design goals are divided in three groups. First the general design goals are given. Then the required processing power is deduced for the DSP using the general design goals. Finally design goals are presented which would improve the design of the DSP.

### General Design goals

After all algorithms were examined it appeared that GSM with the enhanced full rate voice coder is the most computational complex mode for the DSP. It is therefore our design goal to be able to execute the Enhanced Full Rate (EFR) voice coder fast enough to satisfy its timing constraints.

Examining the EFR showed that its most common operation is a Multiply ACummulate (MAC). Therefore, the MAC has to be part of the instruction set and has to be executed on the DSP as fast as possible and preferably in one cycle.

It is furthermore important to keep the instruction set and architecture simple. A simple DSP design will be much easier to implement.

If an processor is easier to implement it is finished quicker. Since nowadays fast time to market is crucial our DSP should be easy to implement.

### The required processing power for the DSP

To derive the target processing power for the DSP the worst mode of operation for the ASIP DSP processor is used, namely GSM with the enhanced full rate encoder.

Estimates for the number of cycles needed to perform the algorithms are shown in table 2.

**Table 2:**

| Complexity estimate for heaviest processing mode of the ASIP. | | |
|---|---|---|
| Algorithm | Transmit path (K instruction/frame) | Receive path (K instruction/frame) |
| EFR voice coder | 400 | 60 |
| Channel coder | 10 | 40 |
| Burst formatter | 10 | 10 |
| Equalizer | - | 60 |
| Total | 420 | 170 |

From a timing analysis of the GSM protocol it is found that the maximum time for the algorithms of the transmit path is 13 ms. In this case no equalization is performed on the DSP to maximize the available time for encoding. This results in a processor throughput of 33 M instruction per second.

If equalization is performed on the DSP processor only 10ms are available for algorithms of the transmit path.

This would then lead to a instruction throughput of 42 Million instructions per second.
A 16x16 MAC operation requires less than 25ns to execute for a 0.7 µ MIETEC technology operating at 5 volt.

Thus the maximum clock rate for 0.35 µ MIETEC 3.3 V technology will be less than 50Mhz. This is made with the notion that a 0.7 µ 5 V Technology will be as fast as a 0.5 µ 3.3 V Technology and that a 0.35µ 3.3 V will be slightly faster than a 0.5 µ and thus slightly faster than a 0.7 µ 5 V.

Thus for the worst case 42 million instruction have to be executed per second while the maximum clock rate is 50 Mhz. This will mean 1.2 clock cycles per instruction. The only way this kind of processor throughput can be obtained is with a pipelined processor.

### Optimization for lower power and lower area

Besides making a processor which can perform the tasks required is it also important to create a processor which performs the tasks in an efficient manner.

Lower power consumption can make the product cheaper since least expensive packaging material can be used. But for our application the most important reason is that lower power will increase the operating time. Normal power reduction techniques reduce the power used by the logic circuits. Although this is a valid method, one major power consumer is forgotten, namely the memories . Every time an instruction word, or data item, is fetched from memory power is required. The goal for the ASPIS system and thus also the DSP is to reduce the total power consumption. Which falls into two parts lowering the power consumption of the memories by reducing the number of instructions and data fetches and by lowering the power consumption of logic operators.

The power consumption of a memory access depends on the address width and data width. To lower the power consumption during instruction fetches a small instruction word is beneficiary. Therefore a 16 bit instruction word is proposed here. Besides lowering the power consumption it will require less pins on the chip and it can reduce the code size. Both effects can lower the cost of the product.

Besides reducing the power also the size of the processor should be minimized. The size of the processor die directly influences the price of the chip and as such the price of the system. Thus the goal is to keep the required area as small as possible.

### Summary of the design goals for the DSP

In the previous sections the following design goals were presented:
- The DSP must be able to handle the GSM with Enhanced Full Rate (EFR) voice coder mode since this is the most complex mode for the processor.
- The DSP must execute GSM with EFR mode efficiently
- To execute the EFR voice coder efficiently a single cycle MAC instruction is required.
- The DSP should be easily implementable to allow quick time to market.
- The DSP must be pipelined to allow real time execution of the EFR mode.
- The power consumption of the DSP must be minimized as much as possible to increase the battery life time.
- To minimize the power consumption used by instruction loading a 16 bit instruction word is used.
- Also the area of the DSP should be minimized to lower the price of the ASPIS system.

### The basic memory architecture of the DSP

The memory architecture is described here since it has a major impact on the instruction set and as such must be decided upon first. An overview of the memory interface followed by a description of the register bank is given next.

Since multiple programmable processors are combined on the same memory interface this memory interface is becoming a serious bottleneck for the system. This bottleneck manifests itself to the DSP processor as stall cycles for instruction and data loads. To remove these stall cycles buffers must be introduced to hold the most frequently accessed data and instruction words. In our case a data memory of 512 16-bits words will be used with a loop buffer for the 64 most recently issued instructions.

The data memory will be made accessible through the lower 1024 words of the data memory address space. By choosing 1024 words extensions are possible to the data memory, if the memory bandwidth would not suffice.

Reducing instruction load stalls requires a buffer or cache to hold the instructions. For the DSP we opted for a loop buffer since this has a lower implementation cost than a complex cache. And the penalty in performance compared with a cache is relatively small. A loop buffer basically remembers the last X instructions. Thus in the case of a software loop, all instructions of the whole loop can be in this buffer and no instruction fetches to the external memory are needed while executing the loop.

Another method to lower the number of loads to the processor is to keep the most frequently used data in registers on the processor. The number of registers in a processor is limited since bits are required to address one out of N registers.

For the DSP 16 registers will be directly available. Of these 16 12 registers are 16-bit wide and 4 registers are 32 bit wide. Four of the in total 16 registers can be used as a vector register.

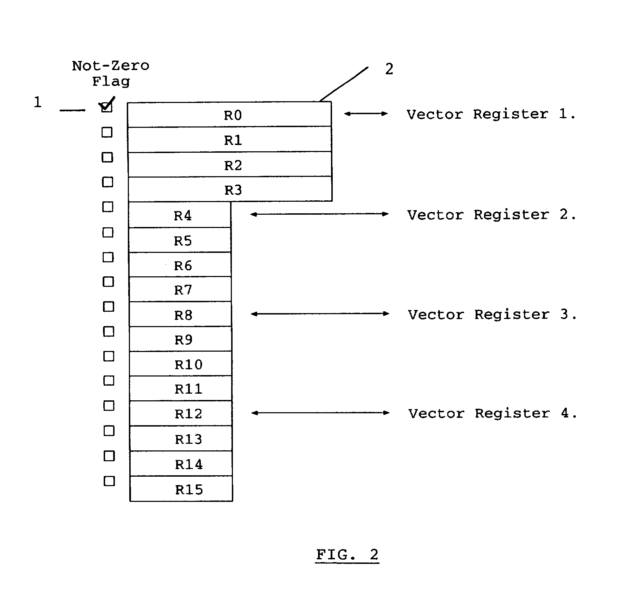

The functionality and use of vector registers will be explained in Example 4. The structure of the register set is shown in Figure 2.

Figure 2 shows that every register has a 1-bit extension. This flag 1 indicated whether the value contained in the register is not zero, resulting in a setting of the not-zero flag 1 for every write into a register 2. The use of the not-zero flag will be made clear during the explanation of the set and branch instructions.

By using 32-bit and 16-bit registers conversions can be made automatically between the two register sizes. The following conversions are made automatically:
- If a operation creates a 16 bit result and it's written in a 32 bit register then the result is shifted 16 times to the left.
- If a operation creates a 32 bit result and it's written in a 16 bit register then the result is shifted 16 times to the right.
- If a 32 bit register is used for an operation which can only receive a 16 bit operand (a 16x16 multiply for instance) then the 16 most significant bits (MSB's) are used for the operation.

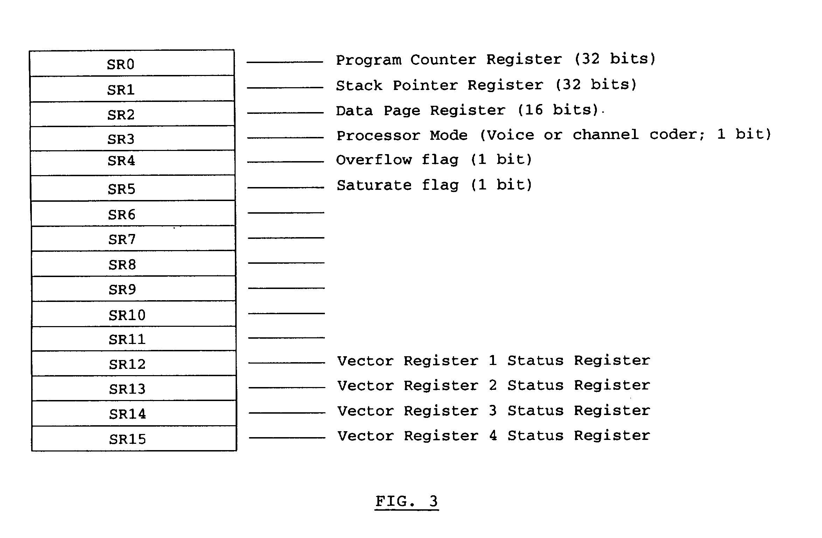

Besides the normal data structures several special registers are used which contain processor state information. These special registers are shown in figure 3.

Although this state information can be used by a program it is not advised. The main function of the special registers is to allow relocatable code and general parameter settings.

### The Instruction Set of the DSP.

The main goal of the instruction set was to fit within a 16 bit instruction word. Another goal is to keep the required decoding effort to a minimum which would ease the design effort.

A division is made in the instruction set into the following categories:
1. Arithmetic and Logic instructions
2. Load/Store instructions
3. Control instructions
4. Algorithm specific Instructions
   a) Voice Coder instructions
   b) Channel Coder instructions

These instruction categories are numbered by the first two bits of all instruction opcodes. The last two groups use the same group identifier. This saves valuable instruction bits but only one of the two instruction group can be used at a time. The choice of group is set in the special register named processor mode, Register SR3 as shown in Figure 3.

The instruction set will be described in the next sections using the following C-like notation:
- *Dest*= *Dest* + *Src* means register Dest is loaded with the value of the addition of the value in register Dest, before the add, and Register Src.
- *Dest=Mem[Src]* means that register Dest is loaded with the value which is located in memory. The address of the value is in register Src.
- *Mem[Dest]=Src* means that the memory location which address is in register Dest is loaded with the value located in the Src register.
- *Dest= Cond ? Src1 : Src2* means that register Dest is loaded with the value of Src1 if Cond is true or value Dest is loaded with the value of Src2 if Cond is false.
- *SpecialRegDest=Src* means that the special register named Dest is loaded with the value in register Src.
- *Not-ZeroDest=Src* means that only the non-zero flag of register Dest is written. The value of register Dest is thus unaffected.

### Arithmetical and logic operations.

All arithmetic and logic operations are performed on 32 bit values. If the result register is a 16 bit register the highest 16 bits of the result will be used. Arithmetic operations operate on signed numbers and logic operations operate on bitstrings, unless specified otherwise. All immediates are 5 bit unsigned integers, allowing to specify a shift of a 1 to the MSB in one instruction.

The supported Arithmetic operations are:
1. Add (ADD): Dest = Dest + Src
2. Add Immediate (ADDI): Dest = Dest + Immediate
3. Subtract (SUB): Dest = Dest - Src
4. Subtract Immediate (SUBI): Dest = Dest - Immediate
5. Logic AND (AND): Dest = Dest AND Src
6. Logic AND Immediate (ANDI) : Dest = Dest AND Immediate
7. Logic OR (OR): Dest = Dest OR Src
8. Logic OR Immediate (ORI): Dest = Dest OR Immediate
9. Logic NOT (NOT): Dest = NOT Src
10. Logic NOT Immediate (NOTI): Dest = NOT Immediate
11. Logic XOR (XOR): Dest = Dest EX-OR Src
12. Logic XOR Immediate (XORI): Dest = Dest EX-OR Immediate
13. Shift Left Logic (SLL): Dest = Dest << Src
14. Shift Left Logic Immediate (SLLI): Dest = Dest << Immediate
15. Shift Right Logic (SRL): Dest = Dest >> Src (shift without sign extend)
16. Shift Right Logic Immediate (SRLI): Dest = Dest >> Immediate (shift without sign extend)
17. Shift Right Arithmetic(SRA): Dest = Dest >> Src (shift with sign extend)
18. Shift Right Arithmetic Immediate (SARI): Dest = Dest >> Immediate (shift with sign extend)
19. Set Not Equal (SNE): Not-Zero_Dest = Dest<>Src ? 1 : 0
20. Set Not Equal Immediate (SNEI): Not-Zero_Dest = Dest<>Src ? 1 : 0
21. Set Less Equal (SLE): Dest = Not-Zero_Dest<Src ? 1 : 0
22. Set Less Equal Immediate (SLEI): Not-Zero_Dest = Dest<Src ? 1 : 0
23. Set Less than (SLT) : Dest = Not-Zero_Dest < Src? 1 : 0
24. Set Less than Immediate (SLTI): Not-Zero_Dest = Dest<Src ? 1 : 0

The behavior of the set instructions differ from the other instructions in that they do not overwrite the value inside the register. Only the non-zero flag is set depending on the result of the comparison executed.

The NOT operation is required since all immediates are unsigned. Although the NOTI operation seems strange it allows us to create a negative immediate.

### Control Instructions

Control instructions handle non-sequential instruction sequences. All instructions can have an immediate but the sizes of the immediates differ from instruction to instruction within this group.

Both the jump and the jump and link instructions presented here can use a 10-bit signed 2's complement immediates for jumps relative to the program counter (PC). The other instructions use a 6 bit immediate instead. A loop instruction can even have two immediates namely the NextAddressafterloop and possibly the number of iterations.

In the instruction set the following control instructions are supported:
1. Jump (J): PC = (PC + 1) + Immediate
2. Jump (JR): PC = Dest
3. Jump and link (JAL): Push PC ; PC = (PC + 1) + Immediate
4. Jump and link (JALR): Push PC ; PC = Dest
5. Branch equal zero (BEQR): PC = (Non-Zero_Src==0)? (PC + 1) + Dest : PC+1
6. Branch equal zero Immediate (BEQ) : PC = (Non-Zero_Src==0)? (PC + 1) + Immediate : PC + 1
7. Branch not equal zero (BNER): PC = (Non-Zero_Src1=1) ? PC+1+Dest : PC+1
8. Branch not equal zero (BNE): PC = (Non-Zero_Src1=1) ? PC+1+Immediate : PC+1
9. Loop (LOOP): Number of iterations, Next address_after_loop
10. Illegal (ILL): Reserved.

The jump and jump and link instructions jump unconditionally to the target address. This address can be relative to the program counter in case of an immediate or absolute target address.

The jump and link (JAL) instruction jumps to the target address and pushes the program counter onto the stack. The push instruction will be explained in the next instruction group. This instruction is used for procedure calls and its main purpose is to hide the program counter.

No return from subroutine is present since the program counter can be retrieved from the stack with a normal pop instruction followed with a jump to that address. The pop instruction will also be explained in the next instruction group. Conditional branching is supported by the branch equal and branch not equal zero instructions. They test the Non-Zero flag of the Src register and if this is equal(BEQ) or not equal(BNE) to zero then the content of the destination register is added to the program counter plus one. A branch instruction is always relative to the program counter. The branch and the jump instructions are relative to the program counter plus one since the program counter is already updated to this value before the instruction is decoded. An enhancement to the instruction set is zero overhead looping. With the loop instructions, the next address after the loop is specified and the number of loop iterations. The next address after the loop is always an immediate value and the number of iterations can be an immediate. The next address after the loop is also relative to the program counter plus one.

Besides the normal control instructions an illegal instruction is foreseen for debugging purposes.

### Load/Store Operations.

Load/Store operations are the operations which address the external memory while most other operations operate on registers. Besides the loading and storing to and from memory also data moves between registers are supported.

The memory is addressed in 16 bit words with a 16 bit address which results in 64K words of data memory. A page register is introduced as a special register, register SR2 in Figure 3, to allow data memories larger than 64K words.

Remember that from the total address the first 1024 words are used for the on-chip memory.

Load and store operations can use an 6-bit signed immediate.

The load/store operations are:
1. Load (LD): Dest=Mem[Src]
2. Load (LDI): Dest=Immediate
3. Store (ST) : Mem[Dest]=*Src*
4. Store (STI) : Mem [Dest] =Immediate
5. Move (MOV): Dest=Src
6. Move integer register to special (MOVI2S): SpecialReg_Dest=Src
7. Move special register to integer (MOVS2I): Dest=SpecialReg_Src
8. Push stack (PUSH) : Mem[SP]=Src; SP=SP+1
9. Pop stack (POP): SP=SP-1 ; Dest=Mem[SP]
10. Vector transfer (VEC): Mode, Dest, Size

The Vector transfer function allows operation to be performed on a one dimensional array of data elements. The vector mode can take on the following values:
- Mode=Load Vector in register
- Mode=Store Vector from register
- Mode=Load Vector with window read
- Mode=Load Vector Read+Write
- Mode=Cyclic Vector for Reading and Writing

### The Extended instruction Set for the Voice Coders.

The voice coders have a set of basic operators defined in the C description. After tracing the enhanced full rate voice coder , which is the most computational intensive voice coding algorithm, the following primitives where added to the instruction set.
The enhancement instructions for the voice coder are:
1.16-bit Multiply with 16 bit result (MULT): Dest[16] = (Src1 * Src2) >> 15
2.16-bit Multiply with 32 bit result and shift (LMULT): Dest[32] = (Dest * Src2) << 1
3.16-bit Multiply Accumulate with 32 bit result (MAC): Dest[32] = Dest + [(Src1 * Src2) << 1]
4. 16-bit Multiply subtract with 32 bit result (MSU) : Dest[32] = Dest - [(Src1 * Src2) << 1]

All instructions out of the voice coder group can use a 4 bit immediate.

### The Extended instruction set for the Channel Coder

Another set of algorithms which we would like to support are the channel coder algorithms. Its functionality is not very well supported by a normal instruction set since it operates on bits and not on 16/32 bit words.

For the description of the channel coder a different notation will be used. The name of the instruction is given with its arguments. An argument in brackets ('[' Operand '] ') can be implicit.

For speed up of the viterbi decoding and other channel coder functions the following instructions are included:
1. Distance: Distance 1,Distance 2 = F(input bits C$, [State])
2.Add Compare Select 1: new total distance = F(State J, Distance 1, Distance 2, old total distance)
3. Add Compare Select 2: new total distance = F(State J+8, Distance 2, Distance 1, old total distance)
4. Backtrace: Decoded bits, New State = F(Trellis word, Old State)
5. CRC-encode: CRC-code=F(polynomial, input bits)
6. Convolution coder: Conv bits= F(Polynomials, input bits)

To understand the first three instructions a basic understanding of viterbi convolution decoding is required.

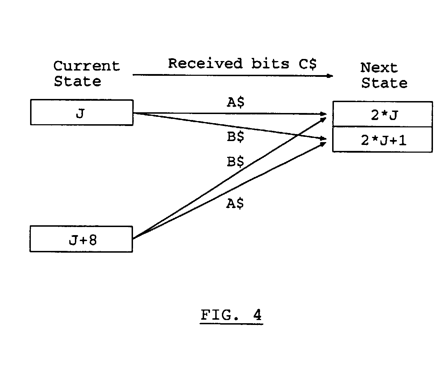

When, as in our case, the state of the convolution code is four bits only 16 states are possible. Then for each state the best path leading to that state is remembered. At the end of the decoding the best overall path is chosen. When searching for the best path leading to state 2J and 2J+1 the states J and J+8 are used from the previous iterations. The calculation is performed on two states since this is computationally more efficient. The viterbi decoding for 2J and 2J+1 is shown in figure 4. In this figure, is A$ the code-bits which result from encoding a zero in state J and B$ for encoding a zero in state J+8.These values are reused for 2*J+1.

The distance instructions calculates A$ using the correct convolution code. After which the distance between the received bits (C$) and A$ is calculated. From this distance the distance between C$ and B$ can be easily calculated. Both values are stored within the channel coding unit.

The next step in the viterbi decoding algorithms is also the next instruction and this is the Add-compare-select instruction. This instructions calculates the two total distances for state 2J or 2J+1 by adding the two calculated distances to the total distance for state J and J+8. The smallest of the two is chosen and the selection is recorded in the state vector. As we mentioned above after all input bits are processed 16 states remain. From these 16 states the one with the smallest total distance is chosen. Then the path leading to that state is traversed and the decoded bits are the inverse decoded bitstream. The Backtrace instruction takes the selected state and outputs the decoded bits plus it sets the pointer for the next iteration. Thus a 16 bit vector is loaded. The current pointer points to the state. the bit in this position is used to calculate the output bit and this also changes the pointer for the next iteration in the back-trace.

### The instruction format

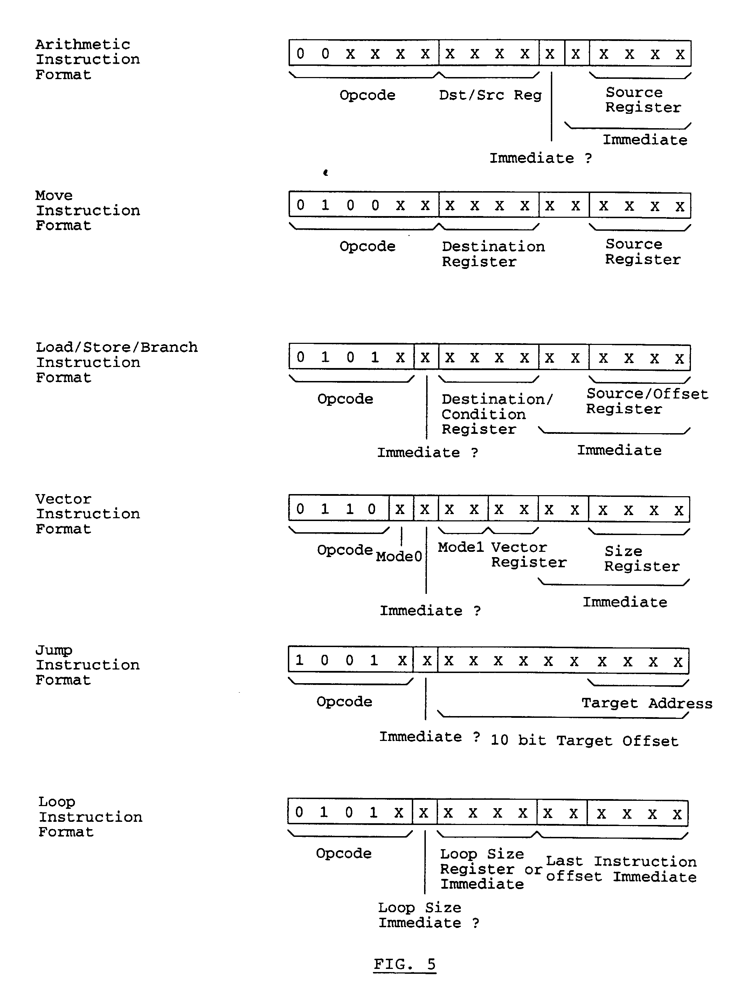

The goal of the instruction set design is to create a compact 16-bit instruction set which would imply an easily implementable decoding structure. Moreover should the instruction set be very efficient in performing the required tasks.
Basic decoding complexity can be estimated from the number of instruction formats and the dependence of the opcode on the value of the consecutive bits. All instruction formats are shown in figure 5.

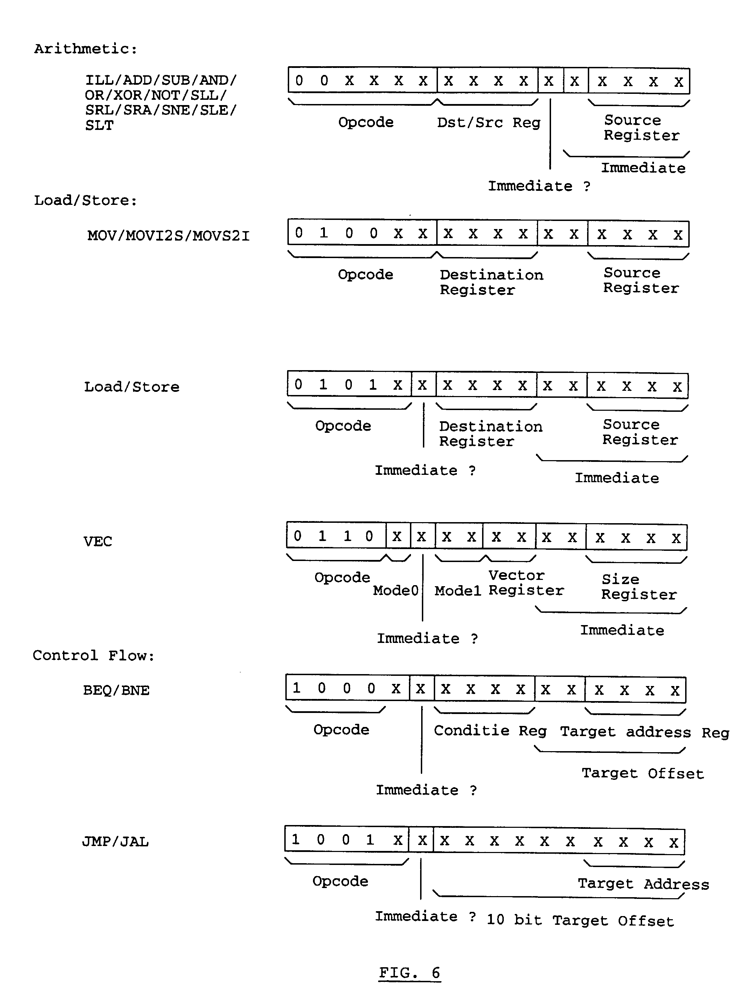

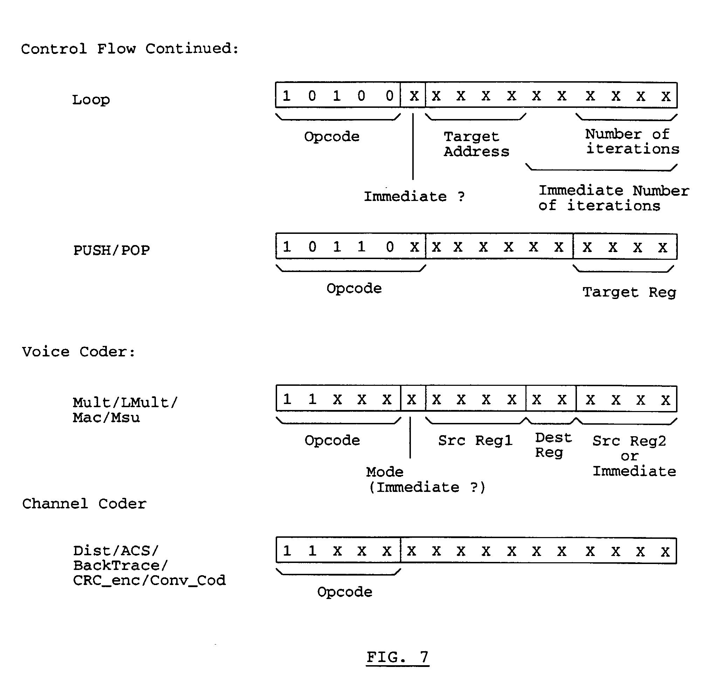

Efficient decoding can be seen from the fact that all instructions have the registers fields located in the same position. This allows quick extraction of the operand registers and thus fast operand loading. The figure also shows that the exact layout of the channel coder instructions is not yet performed. Figure 6 and figure 7 show the complete instruction set layout for all instructions.

### The hardware architecture of the DSP

The previous section described the instruction set of the DSP. Then the next step is to find the most efficient hardware implementation for the instruction set as described above.

As mentioned above, it was concluded that the DSP has to be pipelined. So, first an overview of the processor pipeline is given. Then, the mapping of the instruction groups on the pipeline is given. This section is ended with a description of all the pipeline stages.

### Overview of the DSP processor pipeline.

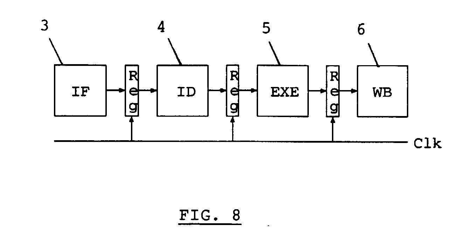

A pipelined processor divides the execution steps of an instruction in stages. These stages are shown in Figure 8.

In this figure the following pipeline stages are used:
- Instruction Fetch (IF) (3): load the instruction at the address stored in the program counter and increment the program counter.
- Instruction Decode (ID) (4): translates the instruction into control signals for the processor and load its operands.
- Execute (EXE) (5): Executes the operation specified in the instruction, i.e. an Add, subtract.
- Write Back (WB) (6) : stores the result from the operation into the destination register.

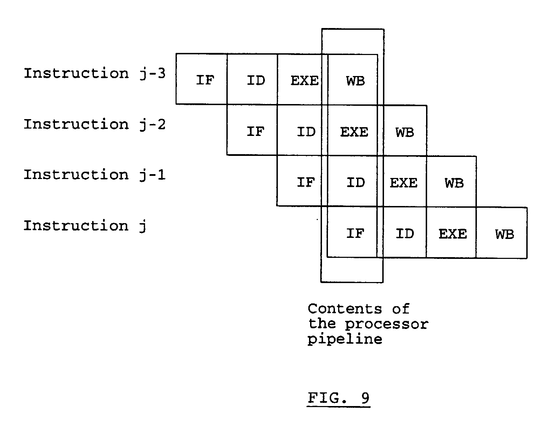

Each of these pipeline stages are executing at the same time only on a different instruction. An example of the state of the pipeline is shown in Figure 9.

From this figure the following problems can be deducted:
1. Instruction J can not use the result of instruction J-1 since it is not yet available in the instruction decode stage.
2. Instruction J-1 could be a jump but when the jump is executed two wrong instructions are fetched from memory.
3. When a load to external memory is executing no new instruction can be loaded, since only one bus to external memory is available.

These and other problems will be described in the next sections when the instruction set of the DSP is mapped on the basic pipeline as was presented here.

### Basic pipeline operation for non-control instructions.

The normal pipeline execution, as shown in Figure 8 can be used for all non-control instructions.

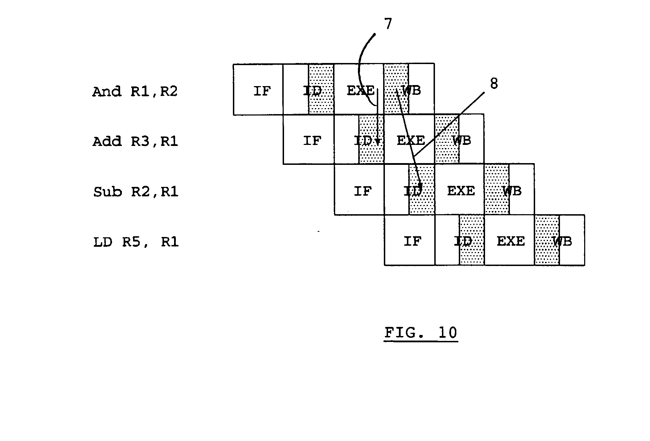

If a piece of code is mapped on this pipeline then the pipeline will resemble Figure 10.

The following problem can occur when executing the pipeline: Register R1 is written in the first instruction and the remaining instructions use R1 before the first instruction writes R1.

Using pipelining shows that there is a dependencies between instructions (shown in Figure 10 as arrows 7 and 8).

The second instruction reads the register R1 in the second half of the instruction decode stage but the result will be written one cycle later. The second instruction therefore has to wait one cycle before it can start. This stall can be prevented if the result of the execution stage is forwarded to the beginning of the next execution stage.

A stall cycle between the first and third instruction is prevented by writing the result in the first half of the write-back stage and reading the register set in the second half of a clock cycle. The fourth instruction can always progress since the value is updated in the register set.

### Pipeline operation for a Branch or Jump instruction.

When a branch instruction is executed a register has to be compared with zero. If the branch should be taken then the next address should be the branch target instead of the next instruction, otherwise the next instruction is used. When the branch is executed in the execute stage of the pipeline then two wrong instructions are already loaded if the branch is taken.

A commonly used solution to overcome this problem is to execute two instructions after the branch which are always executed independently from the fact if the branch is taken or not. Then the new instructions are fetched from the correct address.

It is however possible to reduce the number of branch delay instructions to one by executing the branch in the decode stage. After the operand loading a quick check is made on the branch condition and the resulting address is calculated.

A jump instruction will also use this strategy since it is only known in the decode stage that the current instruction is a branch and thus one wrong instruction is fetched if the same fast jump evaluation method is used as for the branch instruction.

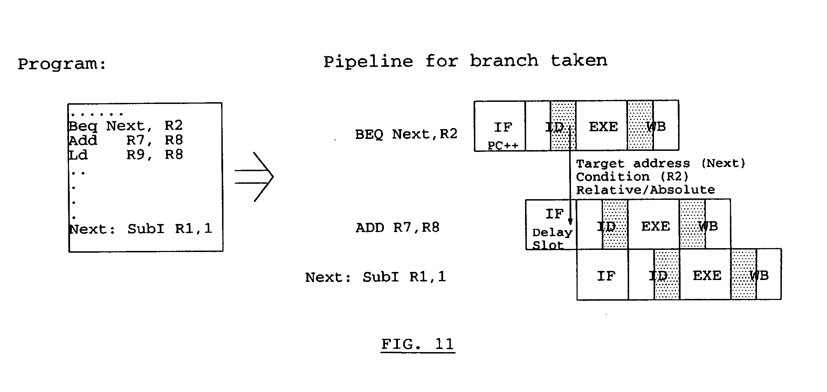

The structure of the pipeline with one delay slot is shown in Figure 11.

If the previous instruction writes the condition of the branch then the branch instruction can not evaluate the result of the branch instruction since that instruction is in its decode phase. This problem is called a data-hazard since the problem only exist if the same register is read in the branch or jump instruction that will be written by the previous instruction.

This hazard is not present if the instruction which sets the condition is not a Set instruction. Since for a set instruction it is possible to forward the result of the set instruction to the decoding phase in time.

The data hazard can also be removed for all other arithmetic/logic instructions by also using a dedicated forward path.

### Pipeline operation for a Loop instruction.

A loop instruction programs the hardware to perform a group of instructions multiple times. If a loop consist of only one instruction then the hardware has to change the program counter to point to that instruction before the Execute stage of the loop instruction itself.

Two problems exist with the loop instruction. First, if the loop only consists of one instruction then already two instructions will be loaded by the time the loop instruction is in its execute stage of the pipeline. This problem can also be solved by executing a loop instruction in the decode stage of the pipeline. The other problem is that if a loop should not be executed since the loop iterator is zero already the first instruction of the loop is fetched. Therefore a loop iterator can not be zero.

Furthermore, a loop without any instructions in is also not allowed.

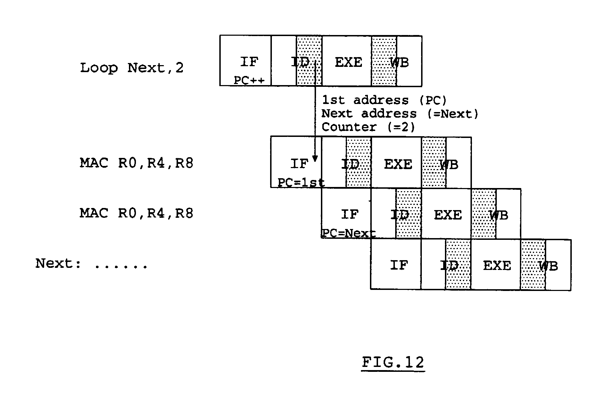

The structure for the pipeline for a loop instruction with only one instruction within the loop body is shown in Figure 12.

The loop iterator must be larger than one and the Program counter (PC) must not be equal to the first instruction after the loop. These checks plus the possible adjustment of the program counter must be performed before the execution stage of the loop instruction.

A data hazard is present when the result of the instruction before the loop instructions is used as the number of iterations. This hazard is not present if the previous instruction is a load immediate.

A more delicate problem is that if a loop is exited by a branch or jump instruction while the loop iterator is still not zero. This is not allowed. Another problem could arise if the delay instruction after the branch is the last instruction in a loop. In this case there are two processes which want to set the program counter. Also this is not allowed and as such must be prevented.

### Functionality of the Instruction Pipeline stages.

After mapping the instruction set on the pipeline is it now possible to give a description of the functionality of the individual pipeline stages.

### The Instruction Fetch stage.

The instruction Fetch stage is divided into two halves. At the falling edge of the clock the next instruction is loaded at the address stored in the program counter. This is followed by incrementing the program counter. The second half of the instruction Fetch stage starts at the rising edge of the clock. At the end of the second half the new instruction is loaded into the instruction register (IR).

During the duration of the second half the following checks are made:
- In case of a jump adjust the program counter
- In case of a branch adjust the program counter if the condition is true
- If a loop instruction is found its arguments are stored in the active loop registers (old values are backed up).
- In case a loop instruction is active the next instruction is changed to the first instruction inside a loop if the next instruction is the last instruction.

A functional description in C-code for the second half of the instruction fetch stage is given in the following code:

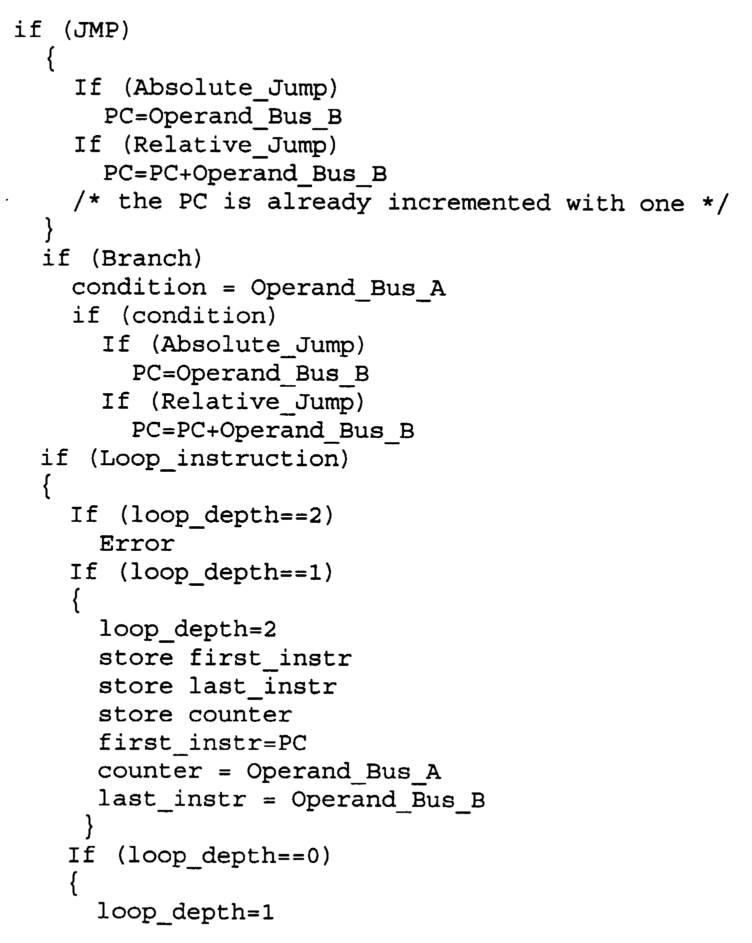

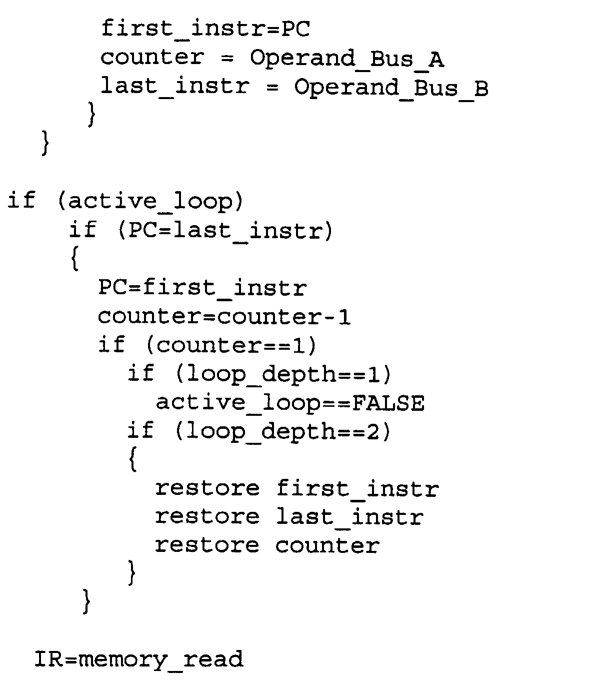

### The Instruction Decode stage.

Also the Instruction Decode (ID) pipeline stage is divided into two parts. The first part decodes the instruction and sets the control signals. The second part loads the arguments of the instruction to the input of the required function unit.
An instruction is decoded in two steps. First the group id is decoded, i.e. the first two bits, then the operands are decoded and the instruction opcode is decoded.
All control signals are set after instruction decoding.

In the second half of the clock the operands of the instruction are moved from their register to the required function unit. A C-like description of the functionality of Instruction Decode stage is shown in the following code.

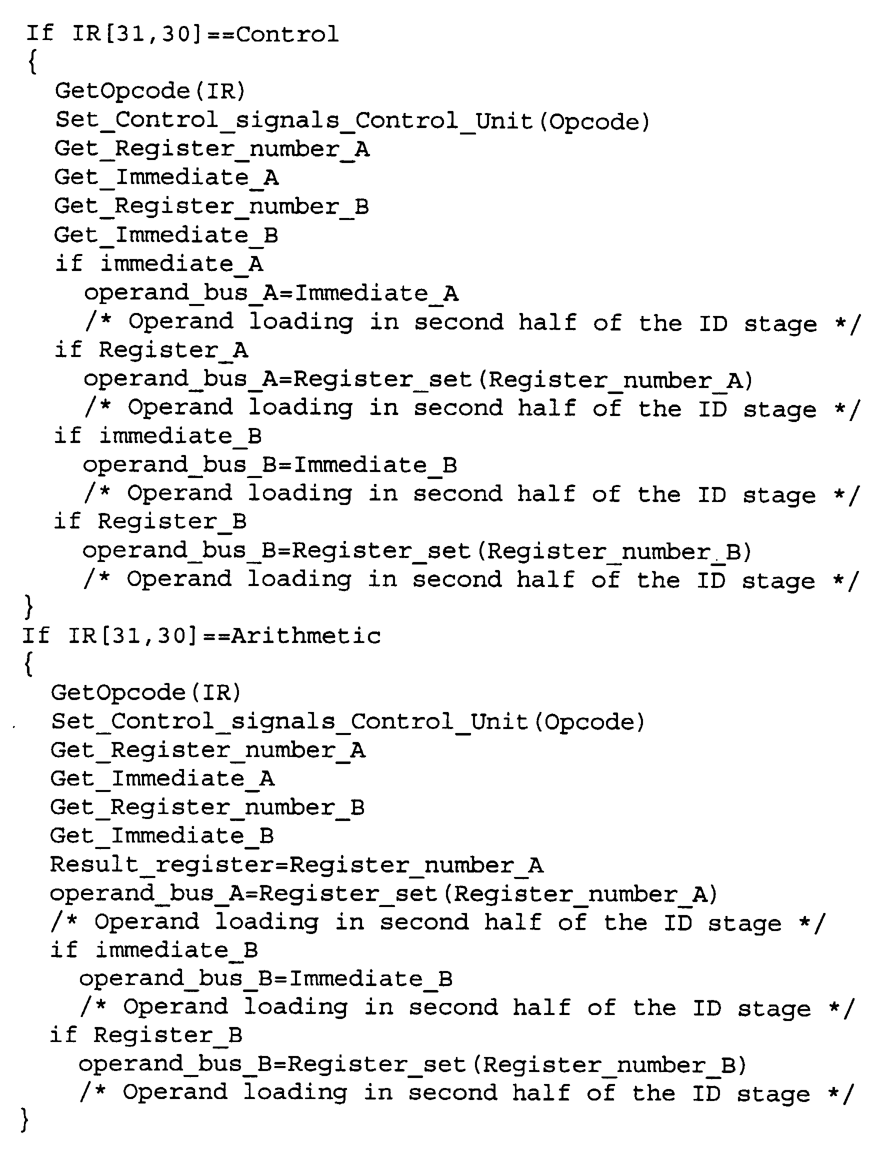

The instruction decoding of arithmetic and load/store are basically the same except for the load immediate instruction. A load immediate instruction loads a register with a immediate value. Thus the immediate is decoded in the instruction decode stage and is written in the write back stage. This means that the instruction decode stage must store the immediate value. Since this value is stored in the instruction decoder it can already be used in the next instruction decode stage as the number of iterations for a loop instructions for instance.

A FIFO of depth two is needed for the support of the load immediate instruction. Both of these registers can also be used for forwarding.

The difference between the instruction decoding for the arithmetic group and the voice and channel coder group is that the latter can use three operands.

### The Execution stage.

The execution stage is from the control perspective the simplest stage, since the operands are placed at the input of the function unit and all control signals for the function unit are set. The only small problem is that a data-dependency can exist between consecutive instruction in the pipeline, as was shown in Figure 10.

A solution for this problem was presented earlier which forwards the result from a function unit to the inputs of the executing unit for the next instruction, if necessary, before the next cycle.

By using fast execution of delayed branches a new problem is created. Due to the execution of the branch in the decode stage it cannot use the result of the execution stage of the previous instruction. This means that a set instruction, which will normally provide the condition for the branch cannot execute directly before the branch. But since a feed-forward network is used, is the result of the test instruction finished before the end of the execution cycle. This will create enough time to set the correct result for the next instruction fetch cycle.

Other instructions that set a register which could be used for a branch could use the same method. However in this case we have chosen to insert a instruction between the instruction that creates the branch condition and the branch itself.

For a loop instruction the same problem can arise if the number of iterations is set in a register by a instruction other than a load Immediate. Also here we have chosen for a delay slot between the two instructions.

Another problem can be caused by loading and storing instructions since they can require the same path to memory. A stall cycle is introduced for each load and store to the off-chip memory, since each clock a load can be executed together with a instruction fetch. The number of stalls introduced this way will be minimized by the redirection of the instruction fetches to the loop buffer and the data fetches to the dedicated data memory. This problem can also occur if multiple vector operations try to access the same memory and between vector operations and load instructions.

### The Write back stage.

The write back stage reads the result from the operation and writes it into the correct register, if a result is produced. This write operation must be performed before the rising edge of the clock.

The destination register and the possible destination value are retrieved from a FIFO buffer of depth two. Each entry holds the destination register, if any, and the possible destination value in case of a load immediate.

### Example 4: Controlling the DSP processor

The DSP processor has no interrupts and to allow the ARM to control the DSP on a task level there must be a means to start the DSP on a specific task.

The most simple and elegant method is to use a small polling program at the end of each DSP task which checks if a task is available and if so it will load an immediate value. This immediate value is used to load the starting address of the new routine and then a jump is performed to that address.

But besides the need to be able to start a specific tasks it is required that the ARM can stop the DSP if timing violation would occur. The DSP must then stop all processing and prepare itself for processing the next speech frame.

This requires that the ARM must be able to reset the DSP. This resetting can be done by writing a reset value to the memory mapped reset line of the DSP.

Combining both methods a piece of memory should be available which is used to transfer task and reset information between the ARM and the DSP. An example of how the DSP should check for tasks in a tasks queue is presented below.

To have a task queue the lower 4 bits of the task number is used to address a jump table. The address for the jump table is calculated by adding the address of the task number plus 1 with 2 times the lower 4 bits of the task number. At this address the valid task mark is written. If this mark is zero no valid task is present and the check must be done again (delayed of course). When the mark is 1 the next data word is the address of the beginning of the task which has to be executed.

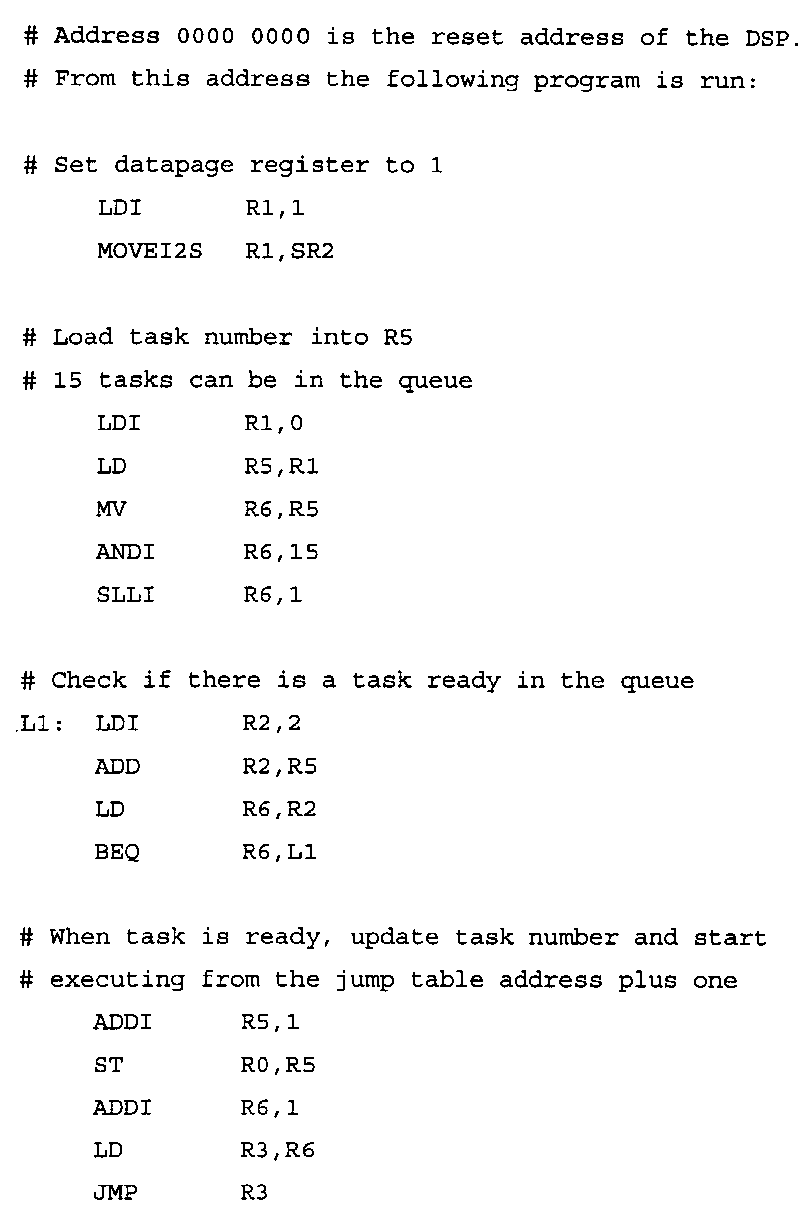

The assumption that all tasks fit in a 16 bit address space can be easily circumvented by using two data words in the jump table to create a 32-bit address.

To reset the DSP a different method is used since the DSP will not be polling for a reset signal. It is possible however to use the address signals of the ARM and let them combine to set the reset signal. Care must be taken to assure that no spurious transition would trigger the reset signal.

Other communications which should occur between the ARM and the DSP will be memory mapped using similar methods as shown above.

## Claims

1. Method for loading and/or storing a data set that has to be processed by a processor according to an algorithm, characterised in that said data set into a vector register before said data set is processed, and said algorithm comprises emptying said vector register.

2. Method as in claim 1, characterised in that said processor is a General Purpose Processor or a Digital Signal Processor (DSP).

3. Method as in claim 1 or 2, characterised in that said vector register is programmed by a vector instruction.

4. Method as in any of the claims 1 to 3, characterised in that said vector instruction comprises a number of words, the address of a first word, a vector mode and a target vector register.

5. Method as in claim 4, characterised in that said vector mode comprises procedures to store and/or load data and/or to access a read vector by the processor.

6. Method as in claim 4, characterised in that the vector mode is selected from the group consisting of Read Mode, Write Mode, Window_read Mode, Read-write Mode, Cyclic Read-Write Mode and Multiple Read Mode.

7. Method as in any of the claims 1 to 6, characterised in that the vector register is made accessible through a general purpose register set of the processor.
